(19) Europäisches Patentamt
European Patent Office
Office européen des brevets

(11) EP 3 778 230 B1

(12) # EUROPEAN PATENT SPECIFICATION

(45) Date of publication and mention of the grant of the patent:
**23.08.2023 Bulletin 2023/34**

(21) Application number: **19780656.5**

(22) Date of filing: **05.04.2019**

(51) International Patent Classification (IPC):
***B32B 27/28*** *(2006.01)*

(52) Cooperative Patent Classification (CPC):
**E02D 31/00; B09B 1/004; B09C 1/00; B32B 7/12; B32B 27/08; B32B 27/306; B32B 27/32; B32B 27/34; B32B 27/36;** B32B 2250/02; B32B 2307/748; B32B 2571/00; Y02W 30/30

(86) International application number:
**PCT/JP2019/015225**

(87) International publication number:
**WO 2019/194318 (10.10.2019 Gazette 2019/41)**

(54) **GEOMEMBRANE, LANDFILL SHEET USING SAME, AND RADON BARRIER FILM**

GEOMEMBRAN, DEPONIEFOLIE UND RADON-SPERRFOLIE

GÉOMEMBRANE, FEUILLE DE DÉCHARGE L'UTILISANT, ET FILM BARRIÈRE AU RADON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2018 JP 2018074013**

(43) Date of publication of application:
**17.02.2021 Bulletin 2021/07**

(73) Proprietor: **Kuraray Co., Ltd.**
**Kurashiki-shi, Okayama 710-0801 (JP)**

(72) Inventors:
- **ISHIUCHI, Satoshi**
**Kurashiki-shi, Okayama 713-8550 (JP)**
- **OKAMOTO, Makoto**
**Kurashiki-shi, Okayama 713-8550 (JP)**

(74) Representative: **Müller-Boré & Partner Patentanwälte PartG mbB**
**Friedenheimer Brücke 21**
**80639 München (DE)**

(56) References cited:
**EP-A1- 2 133 397**
**EP-A1- 2 508 343**
**EP-A2- 1 059 163**
**WO-A1-2011/068105**
**WO-A1-2017/209198**
**WO-A1-2018/052014**
**JP-A- 2003 211 116**
**JP-A- 2003 293 526**
**JP-A- 2012 245 767**
**JP-A- 2012 250 356**
**JP-A- 2013 010 493**
**US-A1- 2016 361 740**
**US-A1- 2016 361 740**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 778 230 B1

## Description

### TECHNICAL FIELD

The present invention relates to a geomembrane exhibiting excellent peel strength between a barrier layer and an adhesive layer, and exhibiting further improved peel strength after prolonged exposure to high temperature and high humidity conditions, as well as a landfill sheet and a radon barrier film therewith. The present invention also relates to a method for preventing harmful substance diffusion, using the landfill sheet or the radon barrier film.

### BACKGROUND ART

An ethylene-vinyl alcohol copolymer (hereinafter, sometimes abbreviated as "EVOH") is a resin exhibiting excellent barrier properties to odor, flavor or the like, and thus, as a multilayer structure with another thermoplastic resin, suitably used for a packaging material for food or the like.

Patent Reference No. 1 has described that a flexible multilayer geomembrane with a barrier layer made of an EVOH or a mixture thereof exhibits excellent chemical resistance. Non-patent Reference No. 1 has described that a multilayer co-extruded geomembrane comprising an outermost layer made of a linear low-density polyethylene (hereinafter, sometimes abbreviated as "LLDPE") and an inner layer made of an EVOH has excellent organic-vapor barrier properties.

### PRIOR ART REFERENCES

#### Patent References

Patent Reference No. 1: EP 2489509 A1

EP 2 508 343 A1 describes a multilayered structure that includes no less than 8 resin-layers, the resin-layer including a layer A constituted with a resin composition containing a gas barrier resin, and a layer B constituted with a resin composition containing a thermoplastic resin, at least one of the resin compositions included in the layer A and the layer B that are adjacent with each other containing a metal salt, the content of the metal salt being no less than 1 ppm and no greater than 10,000 ppm in terms of metal element equivalent, and an interlayer adhesive force between the layer A and the layer B being no less than 450 g/15 mm. The layer A and the layer B may be alternately laminated. Moreover, the average thickness of single layer of at least one selected from the layer A and the layer B is preferably no less than 0.01 μm and no greater than 10 μm.

EP 2 133 397 A1 describes an adhesive resin composition and a laminate using the same.

EP 1 059 163 A2 describes a multilayered structure.

#### Non-patent References

Non-patent Reference No. 1: JOURNAL OF GEOTECHNICAL AND GEOENVIRONMENTAL ENGINEERING 136 (9) 1167-1177.

### SUMMARY OF THE INVENTION

#### PROBLEMS TO BE SOLVED BY THE INVENTION

Any geomembrane has a problem that after it is placed under high temperature and high humidity for a long period, isolated harmful substances leak out. The inventors have further found that prolonged exposure of a multilayer structure used as a geomembrane to high temperature and high humidity conditions leads to delamination and the geomembrane is fixed on the land surface, so that the geomembrane is broken from a starting point where a stress is locally concentrated, resulting in the above leakage. We have further found that the above starting point is generated due to peeling between the EVOH layer and the adhesive layer. The present invention has been achieved on the basis of the above circumstances, and an objective of the present invention is to provide a geomembrane exhibiting excellent peel strength between a barrier layer and an adhesive layer, and exhibiting further improved peel strength after prolonged exposure to high temperature and high humidity conditions.

#### MEANS FOR SOLVING THE PROBLEMS

The inventors have found that a geomembrane formed by laminating a particular EVOH and a thermoplastic

resin via a particular adhesive layer can solve the above problems. Specific embodiments thereof are as follows.

The subject matter of the present invention is defined in the appended set of claims.

EFFECTS OF THE INVENTION

In accordance with the present invention, there is provided a geomembrane exhibiting excellent peel strength between a barrier layer and an adhesive layer, and exhibiting further improved peel strength after prolonged exposure to high temperature and high humidity conditions. Furthermore, a landfill sheet using such a geomembrane or a method for preventing harmful substance diffusion of the present invention using such a landfill sheet can prevent diffusion of harmful substances for a long period.

MODES FOR CARRYING OUT THE INVENTION

A geomembrane of the present invention consists of a multilayer structure comprising a barrier layer (A), an adhesive layer (B) made of an acid-modified thermoplastic resin and a thermoplastic resin layer (C), wherein the thermoplastic resin layer (C) is laminated on at least one side of the barrier layer (A) via the adhesive layer (B), and the barrier layer (A) comprises a modified ethylene-vinyl alcohol copolymer having an ethylene unit content of 18 mol% or more and 55 mol% or less based on the total monomer units and comprising a modifying group having a primary hydroxyl group represented by Formula (I):

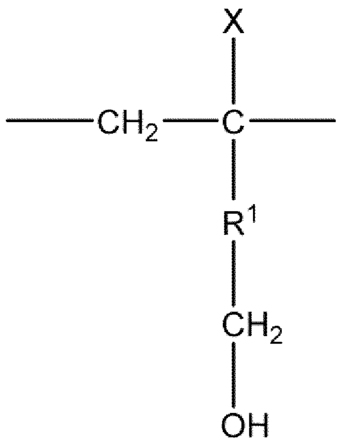

(I)

wherein, in Formula (I), $R^1$ is a single bond and X is a hydroxymethyl group.

<Geomembrane>

Herein, a geomembrane is a film or sheet applied to a land surface or a structure such as buildings, which is used for containment of harmful substances generated from dusts and a contaminated land. Diffusion of harmful substances into the ground or the atmosphere can be prevented by isolating the harmful substances from the land surface or the atmosphere by a geomembrane. The harmful substances include solids, liquids and gases, particularly solutions or vapors of water, chemicals, petroleums and hydrocarbons.

<Barrier layer (A)>

A barrier layer (A) in a geomembrane of the present invention contains a modified EVOH containing a modifying group having a primary hydroxyl group. The modified EVOH, which has not only ethylenic units and vinyl alcohol units, but also primary hydroxyl group units in the modified moiety, allows for providing a geomembrane exhibiting peel strength between the barrier layer (A) and an adhesive layer (B) described later. Furthermore, surprisingly, the geomembrane has further improved peel strength after being exposed to high temperature and high humidity conditions for a long period. It is presumably because a primary hydroxyl group in the modified EVOH allows for stronger hydrogen bonding with an acidic group in an adhesive layer (B) described later, or increases water absorbability to make a barrier layer softer, resulting in increase in surface tension with the adhesive layer (B).

An ethylene unit content in the modified EVOH is 18 mol% or more and 55 mol% or less based on the total monomer units. If the ethylene unit content is less than 18 mol%, melt moldability may be deteriorated. The ethylene unit content is preferably 25 mol% or more, more preferably 30 mol% or more. If the ethylene unit content is more than

55 mol%, barrier properties to harmful substances may be insufficient. The ethylene unit content is preferably 50 mol% or less, more preferably 45 mol% or less.

A saponification degree of a vinyl ester component in the modified EVOH is preferably 90 mol% or more. The saponification degree of a vinyl ester component is more preferably 95 mol% or more, further preferably 98 mol% or more, particularly preferably 99 mol% or more.

A preferable melt flow rate (MFR) (190 °C, under a load of 2160 g) of the modified EVOH is 0.1 to 30 g/10 min, more preferably 0.3 to 25 g/10 min, further preferably 0.5 to 20 g/10 min. Here, for a sample having a melting point of around or higher than 190 °C, MFRs are measured under a load of 2160 g at a plurality of temperatures which are a melting point or higher and plotted in a single logarithmic graph where a horizontal axis is an inverse of an absolute temperature and a vertical axis is a logarithm of an MFR, and a target MFR was determined by extrapolating the graph to 190 °C.

In the light of improvement in adhesiveness with an adhesive resin constituting the adhesive layer (B), the above modified EVOH has the structure represented by Formula (I):

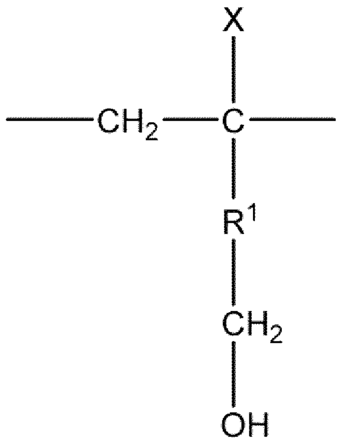

(I)

In general, in Formula (I), X represents a hydrogen atom, a methyl group or a group represented by $R^2$-OH; $R^1$ and $R^2$ represent independently of each other a single bond, an alkylene group having 1 to 9 carbon atoms or an alkyleneoxy group having 1 to 9 carbon atoms; and the alkylene and the alkyleneoxy groups can contain a hydroxyl group, an alkoxy group or a halogen atom. According to the present invention, in Formula (I), $R^1$ is a single bond and X is a hydroxymethyl group.

X is preferably a hydrogen atom or a group represented by $R^2$-OH, more preferably a group represented by $R^2$-OH. The group represented by $R^2$-OH is preferably a hydroxyalkyl group, where $R^2$ is an alkylene group. According to the present invention, in Formula (I), X is a hydroxymethyl group.

An alkylene group and an oxyalkylene group used as $R^1$ or $R^2$ can contain a hydroxyl group, an alkoxy group or a halogen atom. $R^1$ and $R^2$ are preferably an alkylene group or an oxyalkylene group having 1 to 5 carbon atoms, more preferably an alkylene group or an oxyalkylene group having 1 to 3 carbon atoms. According to the present invention, in Formula (I), $R^1$ is a single bond and X is a hydroxymethyl group.

Specifically, according to the present invention, the structure represented by Formula (I) (modifying group) is a structural unit represented by Formula (II). Structural units (modifying group) represented by Formulas (III) and (IV) are not according to the present invention.

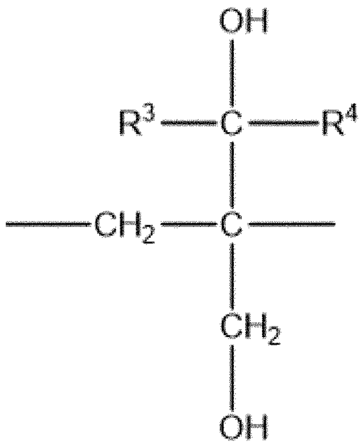

(II)

In general, in Formula (II), $R^3$ and $R^4$ represent independently of each other a hydrogen atom or an alkyl group having 1 to 8 carbon atoms, and the alkyl group can contain a hydroxyl group, an alkoxy group or a halogen atom. According to the present invention, in Formula (II), $R^3$ and $R^4$ are a hydrogen atom.

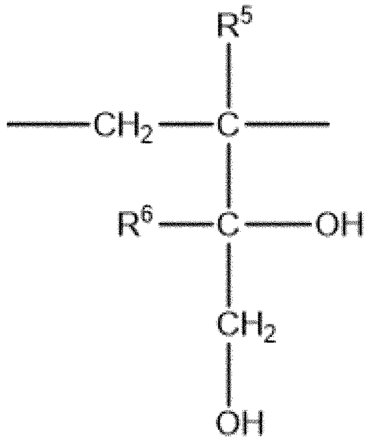

(III)

In Formula (III), which is not according to the present invention, $R^5$ is as defined for X in Formula (I). $R^6$ represents a hydrogen atom or an alkyl group having 1 to 8 carbon atoms, and the alkyl group can contain a hydroxyl group, an alkoxy group or a halogen atom.

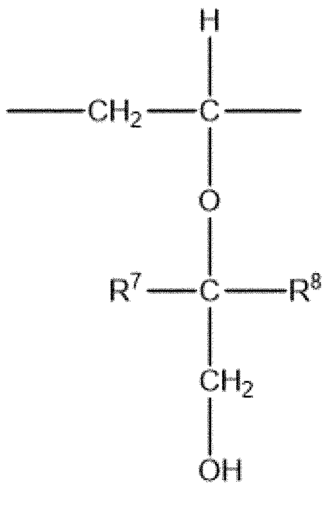

(IV)

In Formula (IV), which is not according to the present invention, $R^7$ and $R^8$ represent independently of each

other a hydrogen atom, an alkyl group having 1 to 8 carbon atoms, a cycloalkyl group having 3 to 8 carbon atoms or a hydroxyl group. Some or all of hydrogen atoms in the alkyl group and the cycloalkyl group can be replaced with a hydroxyl group, an alkoxy group or a halogen atom.

In the present invention, $R^1$ in Formula (I) is a single bond and X is a hydroxymethyl group ($R^3$ and $R^4$ in Formula (II) are a hydrogen atom). The use of the modified EVOH having the modifying group as a barrier layer (A) improves peel strength between the barrier layer (A) and the adhesive layer (B) after prolonged exposure of a geomembrane obtained to high temperature and high humidity conditions. Here, a content of the modifying group having a primary hydroxyl group in the modified EVOH is preferably 0.05 mol% or more and 20 mol% or less. If a content of the modifying group is less than 0.05 mol%, peel strength of a geomembrane after prolonged exposure to high temperature and high humidity conditions may not be improved. A content of the modifying group is more preferably 0.1 mol% or more, further preferably 0.4 mol% or more, most preferably 1.0 mol% or more. If a content of the modifying group is more than 20 mol%, barrier properties may be deteriorated. A content of the modifying group is more preferably 10 mol% or less, further preferably 8 mol% or less, most preferably 5 mol% or less.

Not according to the present invention, $R^1$ in Formula (I) is a hydroxymethylene group, and X is a hydrogen atom ($R^5$ and $R^6$ in Formula (III) are a hydrogen atom). The use of the modified EVOH having the modifying group as a barrier layer improves peel strength between the barrier layer (A) and the adhesive layer (B) after prolonged exposure of a geomembrane obtained to high temperature and high humidity conditions. Here, a content of the modifying group having a primary hydroxyl group in the modified EVOH is preferably 0.1 mol% or more and 20 mol% or less. If a content of the modifying group is less than 0.1 mol%, peel strength of a geomembrane after prolonged exposure to high temperature and high humidity conditions may not be improved. A content of the modifying group is more preferably 0.4 mol% or more, further preferably 1.0 mol% or more. If a content of the modifying group is 20 mol% or more, barrier properties may be deteriorated. A content of the modifying group is more preferably 10 mol% or less, further preferably 5 mol% or less.

Not according to the present invention, $R^1$ in Formula (I) is a methylmethyleneoxy group, and X is a hydrogen atom. The use of the modified EVOH having the modifying group as a barrier layer improves peel strength between the barrier layer (A) and the adhesive layer (B) after prolonged exposure of a geomembrane obtained to high temperature and high humidity conditions. In the methyloxymethylene group, an oxygen atom is bound to a carbon atom in a principal chain. That is, preferably, one of $R^7$ and $R^8$ in Formula (IV) is a methyl group, while the other is a hydrogen atom. Here, a content of the modifying group having a primary hydroxyl group in the modified EVOH is preferably 0.1 mol% or more and 20 mol% or less. If a content of the modifying group is less than 0.1 mol%, peel strength of a geomembrane after prolonged exposure to high temperature and high humidity conditions may not be improved. A content of the modifying group is more preferably 1.0 mol% or more, further preferably 2.0 mol% or more. If a content of the modifying group is 20 mol% or more, barrier properties may be deteriorated. A content of the modifying group is more preferably 15 mol% or less, further preferably 10 mol% or less.

The modified EVOH can be a mixture with an unmodified EVOH. In the light of cost reduction, a mass ratio of the modified EVOH to the unmodified EVOH (modified EVOH/unmodified EVOH) in this mixture is preferably 1/9 to 9/1. In the light of more pronounced effects of the present invention, a mass ratio (modified EVOH/unmodified EVOH) is preferably 9/1 or more, and more preferably, an unmodified EVOH is substantially absent.

When the modified EVOH is a mixture of two or more of the modified EVOHs or a mixture of the modified EVOH and the unmodified EVOH, a content of each monomer unit, a saponification degree and an MFR are an average calculated from a mixing mass ratio.

In the light of barrier properties, a content of the modified EVOH in the barrier layer (A) based on the total of the resin composition is preferably 96 % by mass or more. A content of the modified EVOH is more preferably 98 % by mass or more, further preferably 99 % by mass or more, and particularly preferably, the barrier layer (A) substantially consists of the modified EVOH.

There are no particular restrictions to a resin other than the modified EVOH in the barrier layer (A); for example, a thermoplastic resin including a polyolefin; a polyamide; a polyester; a polystyrene; a polyvinyl chloride; an acrylic resin; a polyurethane; a polycarbonate; and a polyvinyl acetate.

A resin composition constituting a barrier layer (A) can contain other additives as long as the effects of the present invention are not impaired; for example, a metal salt, a thermal stabilizer, an antioxidant, an ultraviolet absorber, a plasticizer, an antistatic agent, a lubricant, a colorant, a filler, a stabilizer, a surfactant, a cross-linking agent, and a fiber reinforcing agent. A content of the other additives in the resin composition is preferably 30 % by mass or less, more preferably 20 % by mass or less, further preferably 10 % by mass or less, particularly preferably 5 % by mass or less.

In particular, the composition preferably contains an alkali metal salt as a metal salt. Such a resin composition containing an alkali metal salt improves interlayer adhesion between the barrier layer (A) and the adhesive layer (B). Examples of an alkali metal salt include, but not limited to, a sodium salt and a potassium salt. There are no particular restrictions to an anionic species in an alkali metal salt, and the salt can be added as a carboxylate, a carbonate, a hydrogen carbonate, a phosphate, a hydrogen phosphate, a borate, a hydroxide or the like.

A content of an alkali metal salt in the resin composition is preferably 10 to 500 ppm in terms of the alkali metal element. If a content of an alkali metal salt is less than 10 ppm, interlayer adhesion may not be sufficiently improved, and thus the content is more preferably 50 ppm or more. If a content of an alkali metal salt is more than 500 ppm, melt stability may be insufficient, and thus the content is more preferably 300 ppm or less.

Preferably, the composition can contain a boron compound as a thermal stabilizer. By adding a boron compound to a resin composition, torque variation during heat-melting can be inhibited. Examples of a boron compound used in the present invention include, but not limited to, boric acids, boric acid esters, boric acid salts and boron hydrides. Specifically, boric acids include orthoboric acid, metaboric acid and tetraboric acid. Boric acid esters include triethyl borate and trimethyl borate; boric acid salts include alkali metal salts and alkaline earth metal salts of the above various boric acids, and borax. Among others, orthoboric acid (hereinafter, sometimes simply referred as "boric acid") is preferable. A content of a boron compound in the resin composition is preferably 20 to 2000 ppm or less in terms of boron atom. If a content of the boron compound is less than 20 ppm, torque variation during heat-melting cannot be sufficiently inhibited, and thus the content is more preferably 50 ppm or more. If a content of the boron compound is more than 2000 ppm, the composition may easily gelate, leading to deterioration in moldability, and thus the content is more preferably 1000 ppm or less.

Preferably, the composition can contain a phosphate compound as a thermal stabilizer. By adding a phosphate compound to a resin composition as described above, discoloration during melt molding can be prevented. Examples of a phosphate compound used in the present invention include, but not limited to, various acids such as phosphoric acid and phosphorous acid and salts thereof. A salt of phosphoric acid can be any of a monobasic phosphate, a dibasic phosphate and a tribasic phosphate, preferably a monobasic phosphate. A cationic species therein is preferably, but not limited to, an alkali metal. Among others, sodium dihydrogen phosphate and potassium dihydrogen phosphate are preferable. A content of a phosphate compound in the resin composition is preferably 5 to 200 ppm in terms of phosphoric acid radical. If a content of the phosphate compound is less than 5 ppm, discoloration resistance during melt molding may be insufficient. If a content of the phosphate compound is more than 200 ppm, melt stability may be insufficient, and thus the content is more preferably 160 ppm or less.

Specific examples of the other components are as follows.

Antioxidant: 2,5-di-t-butyl-hydroquinone, 2,6-di-t-butyl-p-cresol, 4,4'-thiobis-(6-t-butylphenol), 2,2'-methylene-bis-(4-methyl-6-t-butylphenol), octadecyl-3-(3',5'-di-t-butyl-4'-hydroxyphenyl) propionate, 4,4'-thiobis-(6-t-butylphenol) and the like.

Ultraviolet absorber: ethylene-2-cyano-3',3'-diphenyl acrylate, 2-(2'-hydroxy-5'-methylphenyl)benzotriazole, 2-(2'-hydroxy-3'-t-butyl-5'-methylphenyl)5-chlorobenzotriazole, 2-hydroxy-4-methoxybenzophenone, 2,2'-dihydroxy-4-methoxybenzophenone and the like.

Plasticizer: dimethyl phthalate, diethyl phthalate, dioctyl phthalate, waxes, liquid paraffin, phosphoric acid esters and the like.

Antistatic agent: pentaerythritol monostearate, sorbitan monopalmitate, sulfated polyolefins, polyethylene oxide, carbowax and the like.

Lubricant: ethylene-bis-stearamide, butyl stearate and the like.

Colorant: carbon black, phthalocyanine, quinacridone, indoline, azo pigments, red oxide and the like.

Filler: fiberglass, balastonite, calcium silicate and the like.

There are no particular restrictions to a method for adding other components to a modified EVOH, and any known method can be employed.

<Method for producing a modified EVOH (A1)>

There are no particular restrictions to a method for producing a modified EVOH containing the structural unit (II); for example, a method comprising radical-polymerizing ethylene, a vinyl ester represented by Formula (V) and an unsaturated monomer represented by Formula (VI) to give a modified ethylene-vinyl ester copolymer represented by Formula (VII), and then saponifying the copolymer. Hereinafter, the modified ethylene-vinyl alcohol copolymer thus obtained is sometimes abbreviated as a modified EVOH (A1).

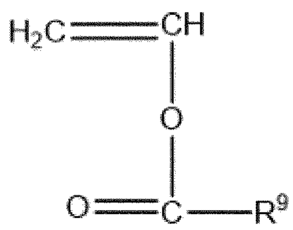

(V)

In Formula V, $R^9$ represents a hydrogen atom or an alkyl group having 1 to 9 carbon atoms. The alkyl group preferably has 1 to 4 carbon atoms. Examples of a vinyl ester represented by Formula (V) include vinyl formate, vinyl acetate, vinyl propionate, vinyl butyrate, vinyl isobutyrate, vinyl pivalate, vinyl versatate, and vinyl caproate. From an economic standpoint, vinyl acetate is more preferable.

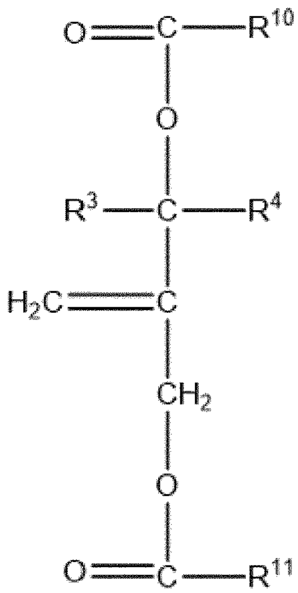

(VI)

In Formula (VI), $R^3$ and $R^4$ are as defined in Formula (II). $R^{10}$ and $R^{11}$ represent independently of each other a hydrogen atom or an alkyl group having 1 to 9 carbon atoms. The alkyl group preferably has 1 to 4 carbon atoms. Examples of an unsaturated monomer represented by Formula (VI) include 2-methylene-1,3-propanediol diacetate, 2-methylene-1,3-propanediol dipropionate and 2-methylene-1,3-propanediol dibutyrate. Among others, 2-methylene-1,3-propanediol diacetate is suitably used in the light of easiness in production. For 2-methylene-1,3-propanediol diacetate, $R^3$ and $R^4$ are a hydrogen atom; and $R^{10}$ and $R^{11}$ are a methyl group.

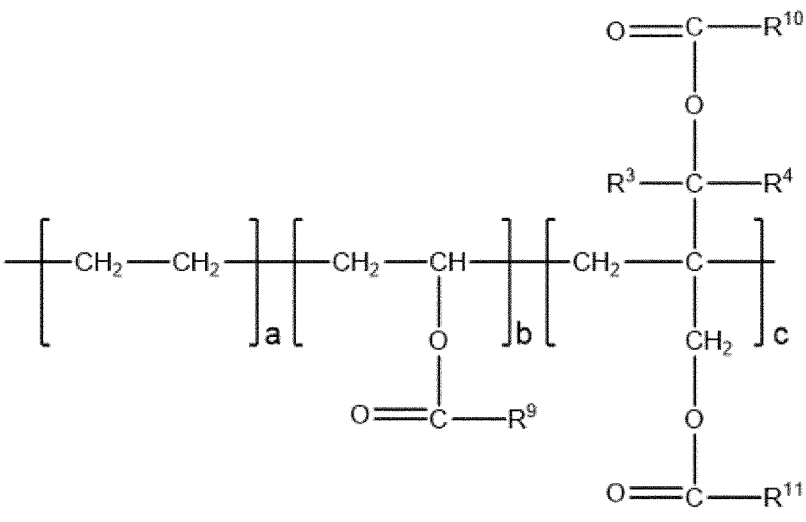

(VII)

In Formula (VII), $R^3$, $R^4$, $R^9$, $R^{10}$ and $R^{11}$ are as defined in Formulas (II), (V), and (VI). In Formula (VII), a, b and c represent contents (mol%) of ethylene units, vinyl ester units and modifying group units based on the total monomer units, respectively. Subsequently, the modified ethylene-vinyl ester copolymer thus obtained is saponified.

Instead of the unsaturated monomer represented by Formula (VI), an unsaturated monomer represented by Formula (VIII) can be involved in copolymerization. Here, by saponification, only units derived from the unsaturated monomer represented by Formula (V) are saponified.

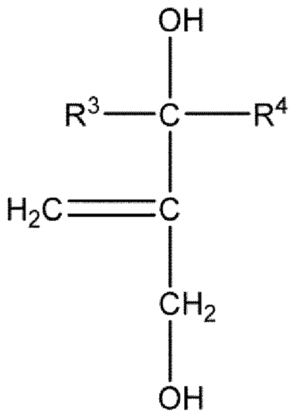

(VIII)

In Formula (VIII), $R^3$ and $R^4$ are as defined in Formula (II). Examples of the unsaturated monomer represented by Formula (VIII) include 2-methylene-1,3-propanediol (according to the present invention) and 2-methylene-1,3-butanediol (not according to the present invention).

The unsaturated monomers represented by Formula (VI) and Formula (VIII) used in the present invention are highly susceptible to copolymerization with a vinyl ester monomer, so that a copolymerization reaction easily proceeds. It is, therefore, easy to increase a modified amount or a polymerization degree of a modified ethylene-vinyl ester copolymer obtained. Furthermore, even when the polymerization reaction is terminated in a low polymerization rate, the amount of the unreacted unsaturated monomers remaining at the end of polymerization is small, which is advantageous in terms of environment and cost. In this regard, the unsaturated monomers represented by Formula (VI) and Formula (VIII) are superior to other monomers having only one carbon atom having a functional group at an allyl position such as allyl glycidyl ether and 3,4-diacetoxy-1-butene. Here, the unsaturated monomer represented by Formula (VI) is more reactive than the unsaturated monomer represented by Formula (V).

A method for copolymerizing ethylene, the vinyl ester represented by Formula (V) and the unsaturated monomer represented by Formula (VI) or (VIII) to produce a modified ethylene-vinyl ester copolymer can be any of batch polymerization, semi-batch polymerization, continuous polymerization and semi-continuous polymerization. The polymerization method can be any known method such as bulk polymerization, solution polymerization, suspension polymerization and emulsion polymerization. Bulk polymerization or solution polymerization in which polymerization is conducted in a neat system or in a solvent such as an alcohol is generally employed. For the purpose of producing a modified ethylene-vinyl ester copolymer with a high polymerization degree, the use of emulsion polymerization is one alternative.

There are no particular restrictions to a solvent used in solution polymerization; for example, an alcohol, preferably a lower alcohol such as methanol, ethanol and propanol. The amount of a solvent in a polymerization reaction solution can be determined, taking a viscosity-average polymerization degree of the desired modified EVOH and chain transfer of the solvent into consideration. A mass ratio of a solvent to the total monomers contained in the reaction solution (solvent/total monomers) is generally within the range of 0.01 to 10, preferably 0.05 to 3.

An initiator used for the copolymerization of ethylene, the vinyl ester represented by Formula (V), and the unsaturated monomer represented by Formula (VI) or (VIII) can be selected from the group consisting of known polymerization initiators such as azo initiators, peroxide initiators and redox initiators depending on a polymerization method. Examples of an azo initiator include 2,2'-azobisisobutyronitrile, 2,2'-azobis(2,4-dimethylvaleronitrile) and 2,2'-azobis(4-methoxy-2,4-dimethylvaleronitrile). Examples of a peroxide initiator include percarbonates such as diisopropyl peroxydicarbonate, di-2-ethylhexyl peroxydicarbonate and diethoxyethyl peroxydicarbonate; perester compounds such as t-butyl peroxyneodecanate, $\alpha$-cumyl peroxyneodecanate and acetyl peroxide; acetylcyclohexylsulfonyl peroxide; and 2,4,4-trimethylpentyl-2-peroxyphenoxy acetate. The above initiator can be combined with potassium persulfate, ammonium persulfate, hydrogen peroxide, or the like. A redox initiator is a combination of the above peroxide initiator with a reducing agent such as sodium bisulfite, sodium bicarbonate, tartaric acid, L-ascorbic acid and Rongalite. The amount of a polymerization initiator is adjusted, depending on a polymerization rate. The amount of a polymerization initiator is preferably 0.01 to 0.2 moles, more preferably 0.02 to 0.15 moles based on 100 moles of the vinyl ester monomer. A polymerization temperature is suitably, but not limited to, room temperature to about 150 °C, preferably 40 °C or higher and a boiling point of a solvent used or lower.

The copolymerization of ethylene, the vinyl ester represented by Formula (V), and the unsaturated monomer represented by Formula (VI) or (VIII) can be conducted in the presence of a chain transfer agent as long as the effects of the present invention are not impaired. Examples of a chain transfer agent include aldehydes such as acetaldehyde and propionaldehyde; ketones such as acetone and methyl ethyl ketone; mercaptans such as 2-hydroxyethane thiol; and phosphinates such as sodium phosphinate monohydrate. Among these, aldehydes and ketones are preferable. The

amount of the chain transfer agent in a polymerization reaction solution is determined, depending on a chain transfer coefficient of a chain transfer agent and a polymerization degree of the desired modified ethylene-vinyl ester copolymer. It is generally 0.1 to 10 parts by mass based on 100 parts by mass of the vinyl ester monomer.

The modified ethylene-vinyl ester copolymer thus obtained can be saponified to give a modified EVOH (A1). Here, the vinyl ester units in the copolymer are converted into vinyl alcohol units. Furthermore, at the same time, ester bonds derived from the unsaturated monomer represented by Formula (VI) are hydrolyzed to give 1,3-diol structures. Thus, different types of ester groups can be simultaneously hydrolyzed by a single saponification reaction.

A modified ethylene-vinyl ester copolymer can be saponified by a known method. The saponification reaction can be generally conducted in an alcohol solution or an aqueous alcohol solution. Here, examples of a suitable alcohol include lower alcohols such as methanol and ethanol, more preferably methanol. An alcohol or aqueous alcohol used in the saponification reaction can contain another solvent such as acetone, methyl acetate, ethyl acetate and benzene as long as the amount thereof is 40 % by mass or less. A catalyst used for the saponification is, for example, an alkali metal hydroxide such as potassium hydroxide and sodium hydroxide; an alkali catalyst such as sodium methylate; or an acid catalyst such as mineral acid. A temperature of the saponification is suitably, but not limited to, within the range of 20 to 120 °C. When a gelatinous product precipitates as the saponification proceeds, the product can be pulverized and then washed and dried to give a modified EVOH (A1).

The modified EVOH (A1) can contain a structural unit derived from another ethylenic unsaturated monomer which is copolymerizable with ethylene, the vinyl ester represented by Formula (V) and an unsaturated monomer represented by Formula (VI) or (VIII) as long as the effects of the present invention are not impaired. Examples of such an ethylenic unsaturated monomer include α-olefins such as propylene, n-butene, isobutylene and 1-hexene; acrylic acid and salts thereof; an unsaturated monomer having an acrylic acid ester group; methacrylic acid and salts thereof; an unsaturated monomer having a methacrylic acid ester group; acrylamide, N-methylacrylamide, N-ethylacrylamide, N,N-dimethylacrylamide, diacetoneacrylamide, acrylamidepropanesulfonic acid and salts thereof, acrylamidepropyldimethylamine and salts thereof (for example, quaternary salts); methacrylamide, N-methylmethacrylamide, N-ethylmethacrylamide, methacrylamidepropanesulfonic acid and salts thereof, methacrylamidepropyldimethylamine and salts thereof (for example, quaternary salts); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, 2,3-diacetoxy-1-vinyloxypropane; vinyl cyanides such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane and allyl chloride; unsaturated dicarboxylic acids such as maleic acid, itaconic acid and fumaric acid, and salts or esters thereof; vinylsilane compounds such as vinyltrimethoxysilane; and isopropenyl acetate.

<Method for producing a modified EVOH (A2) and the like> (not according to the present invention)

There are no particular restrictions to a method for producing a modified EVOH having the structural unit (III) (hereinafter, sometimes abbreviated as "modified EVOH (A2)") and the like. For example, a modified EVOH (A2) having a structural unit (III) in which a 1,2-glycol structure is directly bound to a main chain as the most preferable structure, can be produced by a method comprising saponifying a copolymer obtained by copolymerizing 3,4-diol-1-butene, a vinyl ester monomer and ethylene; a method comprising saponifying a copolymer obtained by copolymerizing 3,4-diacyloxy-1-butene, a vinyl ester monomer and ethylene; a method comprising saponifying a copolymer obtained by copolymerizing 3-acyloxy-4-ol-1-butene, a vinyl ester monomer and ethylene; a method comprising saponifying a copolymer obtained by copolymerizing 4-acyloxy-3-ol-1-butene, a vinyl ester monomer and ethylene; and a method comprising saponifying a copolymer obtained by copolymerizing 3,4-diacyloxy-2-methyl-1-butene, a vinyl ester monomer and ethylene. That having an alkylene as a binding chain between a main chain and a 1,2-glycol structure is produced by, for example, a method comprising saponifying a copolymer obtained by copolymerizing 4,5-diol-1-pentene, 4,5-diacyloxy-1-pentene, 4,5-diol-3-methyl-1-pentene, 5,6-diol-1-hexene or 5,6-diacyloxy-1-hexene, a vinyl ester monomer, and ethylene. Among these, preferred is a method comprising saponifying a copolymer obtained by copolymerizing 3,4-diacyloxy-1-butene, a vinyl ester monomer and ethylene in the light of excellent copolymerization reactivity. More preferably, 3,4-diacetoxy-1-butene is used as 3,4-diacyloxy-1-butene. Furthermore, a mixture of monomers having these 1,2-glycol structures can be used. As a small amount of impurities, 3,4-diacetoxy-1-butane, 1,4-diacetoxy-1-butene and/or 1,4-diacetoxy-1-butane or the like can be present. Such a copolymerization method will be described by the following nonlimiting description.

Here, 3,4-diol-1-butene is represented by Formula (IX); 3,4-diacyloxy-1-butene is represented by Formula (X); 3-acyloxy-4-ol-1-butene is represented by Formula (XI); and 4-acyloxy-3-ol-1-butene is represented by Formula (XII).

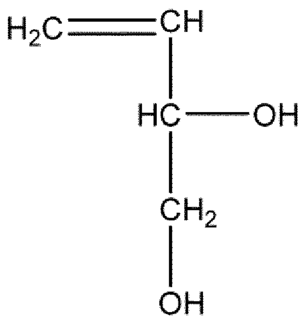
(IX)

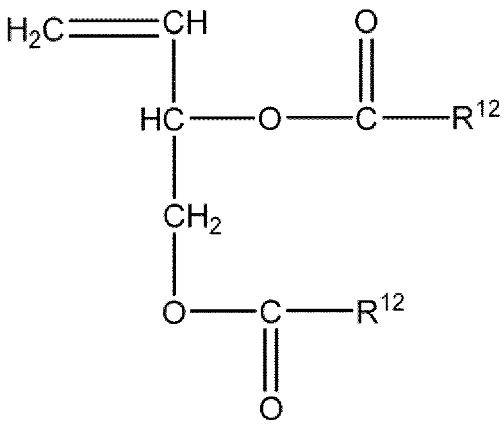
(X)

wherein $R^{12}$ is an alkyl group, preferably methyl group.

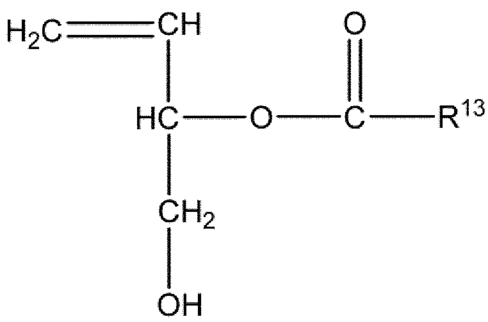
(XI)

wherein $R^{13}$ is an alkyl group, preferably methyl group.

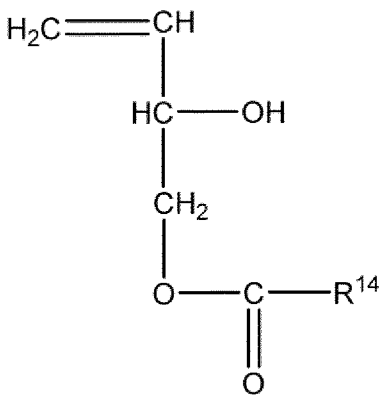

(XII)

wherein, $R^{14}$ is an alkyl group, preferably methyl group.

A compound represented by Formula (IX) is available from Eastman Chemical Company, and a compound represented by Formula (X) is available from Eastman Chemical Company orAcros Organics Company.

Examples of a vinyl ester monomer include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate and vinyl versatate, and economically, vinyl acetate is preferable.

Copolymerization of 3,4-diacyloxy-1-butene or the like with a vinyl ester monomer and ethylene monomer can be conducted by, but not limited to, bulk polymerization, solution polymerization, suspension polymerization, dispersion polymerization, emulsion polymerization or the like, and generally, solution

polymerization is employed.

There are no particular restrictions to a method for charging monomer components in copolymerization, and any method can be employed, including bulk charge, split charge, and continuous charge.

There are no particular restrictions to a copolymerization rate of 3,4-diacyloxy-1-butene or the like, and a copolymerization rate can be determined, depending on the amount of the above structural unit (III) introduced.

Examples of a solvent used in such copolymerization generally include lower alcohols such as methanol, ethanol, propanol and butanol; and ketones such as acetone and methyl ethyl ketone, and industrially, methanol is suitably used. The amount of the solvent can be appropriately selected depending on a polymerization degree of the desired copolymer, taking a chain transfer constant of the solvent into account. For example, when the solvent is methanol, it is selected from the range of generally S (solvent) / M (monomer) = 0.01 to 10 (mass ratio), preferably 0.05 to 7 (mass ratio).

A polymerization catalyst is used in the copolymerization. Examples of such a polymerization catalyst include low-temperature active radical polymerization catalysts including known radical polymerization catalysts such as azobisisobutyronitrile, acetyl peroxide, benzoyl peroxide and lauryl peroxide; peroxy esters such as t-butyl peroxyneodecanoate, t-butyl peroxypivalate, $\alpha$, $\alpha'$-bis(neodecanoylperoxy)diisopropylbenzene, cumyl peroxyneodecanoate, 1,1,3,3,-tetramethylbutyl peroxyneodecanoate, 1-cyclohexyl-1-methylethyl peroxyneodecanoate, t-hexyl peroxyneodecanoate and t-hexyl peroxypivalate; peroxydicarbonates such as di-n-propyl peroxydicarbonate, di-iso-propyl peroxydicarbonate], di-sec-butyl peroxydicarbonate, bis(4-t-butylcyclohexyl) peroxydicarbonate, di-2-ethoxyethyl peroxydicarbonate, di(2-ethylhexyl) peroxydicarbonate, dimethoxybutyl peroxydicarbonate, di(3-methyl-3-methoxybutylperoxy) dicarbonate; diacyl peroxides such as 3,3,5-trimethylhexanoyl peroxide, diisobutyryl peroxide and lauroyl peroxide. The amount of the polymerization catalyst is selected depending on a polymerization rate. For example, when azobisisobutyronitrile or acetyl peroxide is used, its amount is preferably 10 to 2000 ppm, more preferably 50 to 1000 ppm based on the vinyl ester monomer. A reaction temperature of the copolymerization reaction is preferably within the range of about 40 °C to a boiling point, depending on a solvent used and a pressure.

The catalyst can be combined with a hydroxylactone compound or a hydroxycarboxylic acid to improve color tone of an EVOH obtained (close to colorless). There are no particular restrictions to the hydroxylactone compound as long as it has an intramolecular lactone ring and a hydroxyl group; examples include L-ascorbic acid, erythorbic acid and glucono delta lactone, suitably L-ascorbic acid and erythorbic acid. Examples of a hydroxycarboxylic acid include glycolic acid, lactic acid, glyceric acid, malic acid, tartaric acid, citric acid and salicylic acid, suitably citric acid.

The amount of such a hydroxylactone compound or hydroxycarboxylic acid is preferably 0.0001 to 0.1 parts by mass, more preferably 0.0005 to 0.05 parts by mass, further preferably 0.001 to 0.03 parts by mass based on 100 parts by mass of vinyl acetate, in any of batch and continuous type methods. If the amount is less than 0.0001 parts by mass, addition of these compounds may be ineffective, while if the amount is more than 0.1 parts by mass, it may inhibit

polymerization of vinyl acetate. When such a compound is charged in a polymerization system, the compound is generally, but not limited to, diluted with a solvent such as a lower aliphatic alcohol, an aliphatic ester including vinyl acetate, and water, or a mixed solvent thereof, and then charged in a polymerization reaction system.

A copolymerizable ethylenic unsaturated monomer can be involved in the above copolymerization. Examples of such a monomer include olefins such as propylene, 1-butene and isobutene; unsaturated acids such as acrylic acid, methacrylic acid, crotonic acid, phthalic acid (anhydride), maleic acid (anhydride) and itaconic acid (anhydride) or salts or mono- or di-alkyl esters having 1 to 18 carbon atoms thereof; acrylamides such as acrylamide, an N-alkylacrylamide having 1 to 18 carbon atoms, N,N-dimethylacrylamide, 2-acrylamidepropanesulfonic acid or salts thereof, and acrylamidepropyldimethylamine or acid salts or quaternary salts thereof; methacrylamides such as methacrylamide, an N-alkylmethacrylamide having 1 to 18 carbon atoms, N,N-dimethylmethacrylamide, 2-methacrylamidepropanesulfonic acid or salts thereof, and methacrylamidepropyldimethylamine or acid salts or quaternary salts thereof; N-vinylamides such as N-vinylpyrrolidone, N-vinylformamide and N-vinylacetamide; vinyl cyanides such as acrylonitrile and methacrylonitrile; vinyl ethers such as an alkyl vinyl ether having 1 to 18 carbon atoms, a hydroxyalkyl vinyl ether, and an alkoxyalkyl vinyl ether; vinyl halides such as vinyl chloride, vinylidene chloride, vinyl fluoride, vinylidene fluoride and vinyl bromide; vinylsilanes; allyl acetate; allyl chloride; allyl alcohol; dimethylallyl alcohol; trimethyl-(3-acrylamide-3-dimethylpropyl)-ammonium chloride; acrylamide-2-methylpropanesulfonic acid; vinylethylene carbonate; and ethylene carbonate.

Further examples include cationic-group containing monomers and acetoacetyl-group containing monomers such as N-acrylamidemethyltrimethylammonium chloride, N-acrylamideethyltrimethylammonium chloride, N-acrylamidepropyltrimethylammonium chloride, 2-acryloxyethyltrimethylammonium chloride, 2-methacryloxyethyltrimethylammonium chloride, 2-hydroxy-3-methacryloyloxypropyltrimethylammonium chloride, allyltrimethylammonium chloride, methallyltrimethylammonium chloride, 3-butenetrimethylammonium chloride, dimethyldiallylammonium chloride, and diethyldiallylammonium chloride.

Examples of a vinylsilane include vinyltrimethoxysilane, vinylmethyldimethoxysilane, vinyldimethylmethoxysilane, vinyltriethoxysilane, vinylmethyldiethoxysilane, vinyldimethylethoxysilane, vinylisobutyldimethoxysilane, vinylethyldimethoxysilane, vinylmethoxydibutoxysilane, vinyldimethoxybutoxysilane, vinyltributoxysilane, vinylmethoxydihexyloxysilane, vinyldimethoxyhexyloxysilane, vinyltorihexyloxysilane, vinylmethoxydioctyloxysilane, vinyldimethoxyoctyloxysilane, vinyltrioctyloxysilane, vinylmethoxydilauryloxysilane, vinyldimethoxylauryloxysilane, vinylmethoxydioleyloxysilane, and vinyldimethoxyoleyloxysilane.

A copolymer obtained is then saponified. The saponification is conducted in a solution of the copolymer in an alcohol or aqueous alcohol, using an alkali or acid catalyst. Examples of the alcohol include methanol, ethanol, propanol, and tert-butanol, preferably methanol. A concentration of the copolymer in an alcohol is appropriately selected depending on a viscosity of the system, generally within the range of 10 to 60 % by mass. Examples of a catalyst used for the saponification include alkali catalysts including hydroxides or alcoholates of an alkali metal such as sodium hydroxide, potassium hydroxide, sodium methylate, sodium ethylate, potassium methylate and lithium methylate, and acid catalysts such as sulfuric acid, hydrochloric acid, nitric acid, metasulfonic acid, zeolite and a cation-exchange resin.

The amount of such a saponification catalyst is appropriately selected depending on a saponification method, a desired saponification degree and the like, and when an alkali catalyst is used, the proper amount is generally 0.001 to 0.1 equivalents, preferably 0.005 to 0.05 equivalents based on the total amount of monomers such as a vinyl ester monomer, 3,4-diacyloxy-1-butene and the like. The saponification method can be any of batch saponification, continuous saponification on a belt, tower type continuous saponification depending on a desired saponification degree and the like. Tower type saponification under a constant pressure is preferable because the amount of an alkali catalyst in the saponification can be reduced and the saponification reaction can proceed in high efficiency, and the like. Although a pressure during the saponification cannot be surely determined depending on a desired ethylene unit content, it is generally 2 to 7 kg/cm$^2$. A temperature is 80 to 150 °C, preferably 100 to 130 °C.

The modified EVOH (A2) is, after a salt or metal salt is added, dried. It can be dried by any of various drying methods; for example, fluidized drying where a substantially pelletized EVOH composition is dried while being stirred and dispersed mechanically or by hot air, or static drying where a substantially pelletized EVOH composition is dried without dynamic action such as stirring and dispersion. Examples of a dryer for fluidized drying include a cylindrical/groove-type stirred dryer, a circular tube dryer, a rotary dryer, a fluidized bed dryer, a vibrating fluidized bed dryer and a conical rotary dryer. Examples of a dryer for static drying include, but not limited to, a batch box dryer as a stationary material type, and a band dryer, a tunnel dryer and a vertical dryer as a material transfer type. Fluidized drying and static drying can be combined.

A heating gas used in the drying process is air or an inert gas (for example, nitrogen gas, helium gas and argon gas), and a temperature of the heating gas is preferably 40 to 150 °C in the light of productivity and prevention of thermal deterioration of EVOH. A duration of the drying is generally, depending on a water content of the EVOH composition and the amount thereof, preferably about 15 min to 72 hours in the light of productivity and prevention of thermal deterioration of the EVOH.

A modified EVOH (A2) is dried under the above conditions, and a water content of the EVOH (A2) after drying

is preferably 0.001 to 5 % by mass, more preferably 0.01 to 2 % by mass, further preferably 0.1 to 1 % by mass. If the water content is less than 0.001 % by mass, long-run moldability tends to be lowered. In contrast, if the water content is more than 5 % by mass, foaming may occur during extrusion molding.

The EVOH (A2) can contain some monomer residue (for example, 3,4-diol-1-butene, 3,4-diacyloxy-1-butene, 3-acyloxy-4-ol-1-butene, 4-acyloxy-3-ol-1-butene, 4,5-diol-1-pentene, 4,5-diacyloxy-1-pentene, 4,5-diol-3-methyl-1-pentene, 4,5-diol-3-methyl-1-pentene, 5,6-diol-1-hexene, 5,6-diacyloxy-1-hexene, and 4,5-diacyloxy-2-methyl-1-butene) and/or saponified monomers (for example, 3,4-diol-1-butene, 4,5-diol-1-pentene, 4,5-diol-3-methyl-1-pentene, 4,5-diol-3-methyl-1-pentene, and 5,6-diol-1-hexene).

<Method for producing a modified EVOH (A3)> (not according to the present invention)

There are no particular restrictions to a method for producing a modified EVOH containing the structural unit (IV); for example, it is produced by reacting an EVOH having an ethylene unit content of 18 to 55 mol% with a monovalent epoxy compound described later. Non-limiting examples of a suitable reaction method are a method wherein an EVOH and a monovalent epoxy compound are reacted in a solution, and a method wherein an EVOH and a monovalent epoxy compound are reacted in an extruder. A modified EVOH having the structural unit (IV) is sometimes abbreviated as a modified EVOH (A3).

In a method involving a solution reaction, a monovalent epoxy compound can be reacted in a solution of an EVOH in the presence of an acid or alkali catalyst, to give a modified EVOH (A3). Alternatively, a modified EVOH (A3) can be produced by dissolving an EVOH and a monovalent epoxy compound in a reaction solvent followed by heating. A reaction solvent is preferably a polar aprotic solvent which is a good solvent to an EVOH, including dimethylsulfoxide, dimethylformamide, dimethylacetamide and N-methylpyrrolidone.

Examples of a reaction catalyst include acid catalysts such as p-toluenesulfonic acid, methanesulfonic acid, trifluoromethanesulfonic acid, sulfuric acid and boron trifluoride; and alkali catalysts such as sodium hydroxide, potassium hydroxide, lithium hydroxide and sodium methoxide. Among these, an acid catalyst is preferably used. The amount of the catalyst is suitably about 0.0001 to 10 parts by mass based on 100 parts by mass of an EVOH. A reaction temperature is suitably room temperature to 150 °C.

In a production method wherein an EVOH and a monovalent epoxy compound are reacted in an extruder, an extruder used can be, but not limited to, a single screw extruder, a twin screw extruder and a multiscrew extruder with two or more screws. Preferably, an EVOH and a monovalent epoxy compound are reacted at a temperature of about 200 °C to 300 °C. When a twin screw extruder or a multiscrew extruder with two or more screws is used, a pressure in a reaction zone can be easily increased by changing screw configuration, leading to an efficient reaction of an EVOH and a monovalent epoxy compound. For a single screw extruder, a pressure in a reaction zone can be increased by connecting two or more extruders and arranging a valve in a resin flow channel between the extruders. Likewise, two or more twin extruders and/or multiscrew extruders with two or more screws can be connected for the production.

A monovalent epoxy compound is an epoxy compound having only one intramolecular epoxy group.

There are no particular restrictions to a monovalent epoxy compound used. Specifically, the compounds represented by Formulas (XIII) to (XV) are suitably used.

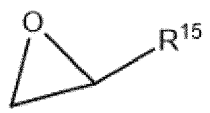

(XIII)

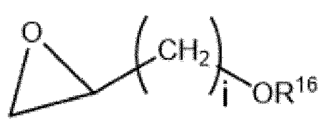

(XIV)

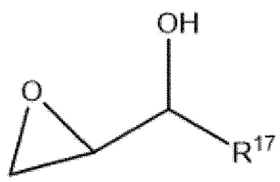

(XV)

In these formulas, $R^{15}$, $R^{16}$ and $R^{17}$ represents a hydrogen atom, an alkyl group having 1 to 7 carbon atoms, or a cycloalkyl group having 3 to 7 carbon atoms; $R^{16}$ and $R^{17}$ represents a hydrogen atom, an alkyl group having 1 to

6 carbon atoms, or a cycloalkyl group having 3 to 6 carbon atoms; and i represents an integer of 1 to 7.

The carbon number of a monovalent epoxy compound is particularly preferably 2 to 8. In the light of gas barrier properties of a modified EVOH (A3) obtained, a monovalent epoxy compound is more preferably 1,2-epoxybutane, epoxypropane, epoxyethane or glycidol, further preferably epoxypropane or glycidol.

A modified EVOH (A3) is produced by reacting an EVOH and a monovalent epoxy compound. A mixing rate of a monovalent epoxy compound based on 100 parts by mass of an EVOH is preferably 1 to 50 parts by mass, more preferably 2 to 40 parts by mass, further preferably 5 to 35 parts by mass.

<Adhesive layer (B)>

An adhesive layer (B) of the present invention is made of an acid-modified thermoplastic resin. Via the adhesive layer (B), a thermoplastic resin layer (C) adheres to at least one side of a barrier layer (A). The acid-modified thermoplastic resin is preferably a carboxylic acid-modified thermoplastic resin. Examples of the carboxylic acid-modified thermoplastic resin include, but not limited to, a modified polyolefin produced by graft-polymerizing an unsaturated carboxylic acid or a derivative thereof such as maleic anhydride to a polyolefin.

<Thermoplastic resin layer (C)>

Examples of a thermoplastic resin constituting a thermoplastic resin layer (C) of the present invention include, but not limited to, polyolefins including homopolymers or copolymers of an olefin such as a linear low-density polyethylene, a low-density polyethylene, a medium-density polyethylene, a high-density polyethylene, a vinyl ester resin, an ethylene-propylene copolymer, a polypropylene, a propylene-$\alpha$-olefin copolymer ($\alpha$-olefin having 4 to 20 carbon atoms), a polybutene, and a polypentene; polyamide such as Nylon 6 and Nylon 6,6; polyesters; polystyrenes; polyvinyl chlorides; polyvinylidene chlorides; an acrylic resin; polycarbonates; polyethylene chlorides; and polypropylene chlorides. Among these, it is preferably at least one selected from the group consisting of polyolefins, polyamides and polyesters, more preferably a polyolefin.

The thermoplastic resin can contain additives such as a thermal stabilizer, an antioxidant, an ultraviolet absorber, a plasticizer, an antistatic agent, a lubricant, a colorant, a filler, a stabilizer, a surfactant, a cross-linking agent, and a fiber reinforcing agent. Among these, the resin preferably contains at least one selected from the group consisting of an antioxidant, an ultraviolet absorber, and a colorant.

<Multilayer structure>

Examples of a layer configuration of a multilayer structure of the present invention include C/B/A/B/C, and C/C/B/A/B/C/C, wherein A, B and C represent a barrier layer (A), an adhesive resin layer (B) and a thermoplastic resin layer (C), respectively.

A total thickness of the multilayer structure is preferably, but not limited to, 100 to 1600 $\mu$m, more preferably 1000 $\mu$m or more. A thickness of the adhesive layer (B) is preferably 2 to 10 % of the total thickness. A thickness of the barrier layer (A) is preferably 2 to 10 % of the total thickness.

The multilayer structure can be produced by, for example, but not limited to, co-extrusion lamination, co-extrusion molding, extrusion lamination, dry lamination, extrusion blow molding, co-extrusion blow molding, co-injection molding, or solution coating. Among these, co-extrusion lamination and co-extrusion molding are preferable, and co-extrusion molding is more preferable. The multilayer structure can be easily and reliably produced by laminating a barrier layer (A), an adhesive layer (B) and a thermoplastic resin layer (C) as described above. The multilayer structure can be obtained as a sheet or film.

<Landfill sheet and a system for preventing harmful substance diffusion using the same>

The geomembrane is preferably used as a landfill sheet. Thus, the landfill sheet can contribute to improving peel strength between a barrier layer (A) and an adhesive layer (B) after prolonged exposure to high temperature and high humidity conditions; maintaining barrier properties to harmful substances; and preventing harmful substance diffusion.

Herein, a landfill sheet is a sheet for preventing diffusion of harmful substances from industrial wastes. The above multilayer structure can be used as a landfill sheet, or as described later, the multilayer structure, a one-sided tape and a double-sided tape can be used as a landfill sheet. The landfill sheet can be formed by joining a plurality of multilayer structures, wherein the ends of the multilayer structures are joined via the double-sided tape. Since harmful substances generally diffuse through a joint part of the double-sided tape, one-sided tape is applied such that it covers over an overlap part of the multilayer structure. A land surface is covered with the resulting landfill sheet consisting of

the plurality of multilayer structures which are mutually bound, for isolating a pollution source in the soil from the atmosphere, and the sheet is fixed by a fixing tool such as a weight, to complete a system for preventing harmful substance diffusion using a landfill sheet. Furthermore, in addition to a sheet covering the land surface, the above sheet can be buried in the soil for preventing diffusion of a pollution source or guiding the pollution source to a particular direction in the soil. The end of the sheet in the soil may or may not be joined with the sheet covering the land surface.

The double-sided tape can be any tape as long as it can join multilayer structures or tightly fix between the multilayer structure and the installation surface. When the installation surface is made of concrete, for example, a rubber double-sided tape is used.

The one-sided tape can be any tape as long as it can adhere to a multilayer structure or fix a multilayer structure on the installation surface. When the installation surface is made of concrete, for example, an aluminum one-sided tape is used.

Harmful substances whose diffusion has been prevented can be collected using a collector and a pipe. Specifically, a hole is made in the multilayer structure; a pipe passes through the hole; and then harmful substances in the soil are guided through the inside of the pipe to the collector.

The pipe can be any pipe as long as it can guide barriered vapor to a collector; for example, a vinyl chloride pipe.

The system for preventing harmful substance diffusion uses, as a landfill sheet, a geomembrane consisting of a multilayer structure wherein the modified EVOH having a primary hydroxyl group is used as a barrier layer (A). It can improve peel strength between the barrier layer (A) and the adhesive layer (B) after prolonged exposure of the landfill sheet to high temperature and high humidity conditions, and maintain barrier properties to harmful substances.

<Radon barrier film and a system for preventing harmful substance diffusion using the same>

A radon barrier film used is a geomembrane consisting of a multilayer structure wherein the modified EVOH having a primary hydroxyl group is used as a barrier layer (A). Thus, the radon barrier film can contribute to improving peel strength between a barrier layer (A) and an adhesive resin layer (B) after prolonged exposure to high temperature and high humidity conditions; and maintaining barrier properties to harmful substances.

Herein, a radon barrier film prevents diffusion of radon gas from the ground. The above multilayer structure can be used as a radon barrier film, or as described later, the multilayer structure, a one-sided tape and a double-sided tape can be used as a radon barrier film. The radon barrier film can be formed by joining a plurality of multilayer structures, wherein the ends of the multilayer structures are joined via the double-sided tape. Since radon gas generally diffuses through a joint part of the double-sided tape, one-sided tape is applied such that it covers over an overlap part of the multilayer structure. A land surface is covered with the resulting radon barrier film consisting of the plurality of multilayer structures which are mutually bound, for isolating a pollution source in the soil from the atmosphere, and the film is fixed by a fixing tool such as a weight, to complete a system for preventing harmful substance diffusion using a radon barrier film. Furthermore, in addition to a film covering the land surface, the above film can be buried in the soil for preventing diffusion of a pollution source or guiding the pollution source to a particular direction in the soil. The end of the film in the soil may or may not be joined with the film covering the land surface.

The double-sided tape can be any tape as long as it can join multilayer structures or tightly fix between the multilayer structure and the installation surface. When the installation surface is made of concrete, for example, a rubber double-sided tape is used.

The one-sided tape can be any tape as long as it can adhere to a multilayer structure or fix a multilayer structure on the installation surface. When the installation surface is made of concrete, for example, an aluminum one-sided tape is used.

Harmful substances whose diffusion has been prevented can be collected using a collector and a pipe. Specifically, a hole is made in the multilayer structure; a pipe passes through the hole; and then harmful substances in the soil are guided through the inside of the pipe to the collector.

The pipe can be any pipe as long as it can guide barriered vapor to a collector; for example, a vinyl chloride pipe.

The system for preventing harmful substance diffusion uses, as a radon barrier film, a geomembrane consisting of a multilayer structure wherein the modified EVOH having a primary hydroxyl group is used as a barrier layer (A). It can improve peel strength between the barrier layer (A) and the adhesive layer (B) after prolonged exposure of the radon barrier film to high temperature and high humidity conditions, and maintain barrier properties to harmful substances (radon gas).

## EXAMPLES

There will be detailed the present invention with reference to Examples, but the present invention is not limited to these examples at all. Unless otherwise indicated, "part(s)" and "%" in Examples below denote "part(s) by mass" and "% by mass", respectively.

Example 1

(1) Synthesis of a modified EVAc

In a 250 L high-pressure reaction tank equipped with a jacket, a stirrer, a nitrogen inlet, an ethylene inlet and an initiator addition port were charged 120 kg of vinyl acetate [Formula (V) where $R^9$ is a methyl group: hereinafter, referred to as "VAc"], 18 kg of methanol (hereinafter, sometimes referred to as "MeOH"), and 0.9 kg of 2-methylene-1,3-propanediol diacetate [Formula (VI) where $R^3$ and $R^4$ are a hydrogen atom, and $R^{10}$ and $R^{11}$ are a methyl group: hereinafter, referred to as "MPDAc"], and the mixture was heated to 60 °C followed by nitrogen bubbling for 30 min, to replace the atmosphere of the reaction tank with nitrogen. Then, ethylene was introduced such that a reaction tank pressure (ethylene pressure) became 3.4 MPa. After a temperature in the reaction tank was adjusted to 60 °C, a solution of 36 g of 2,2'-azobis(2,4-dimethylvaleronitrile) ("V-65", from Wako Pure Chemical Corporation) as an initiator in methanol was added to initiate polymerization. During the polymerization, an ethylene pressure and a polymerization temperature were maintained at 3.4 MPa and 60 °C, respectively. After 6 hours, a polymerization rate of VAc reached 45 % and then the mixture was cooled to terminate the polymerization. The reaction tank was opened to expel ethylene followed by nitrogen gas bubbling, to completely expel ethylene. Subsequently, unreacted VAc was removed under reduced pressure, and then MeOH was added to the modified ethylene-vinyl acetate copolymer (hereinafter, sometimes referred to as "modified EVAc") to which a structural unit derived from MPDAc by copolymerization, to prepare a 20 % by mass MeOH solution.

(2) Saponification of a modified EVAc

In a 500 L reaction tank equipped with a jacket, a stirrer, a nitrogen inlet, a reflux condenser and a solution addition port was charged a 20 % by mass solution of the modified EVAc in MeOH prepared in (1). While bubbling nitrogen into the solution, the solution was heated to 60 °C, and 0.5 moles of sodium hydroxide based on 1 mole of vinyl acetate unit in the modified EVAc was added as a 2 moles/liter MeOH solution. After addition of the solution of sodium hydroxide in MeOH, the mixture was stirred for 2 hours while a reaction tank temperature reaction was kept at 60 °C, to let saponification reaction proceed. Then, acetic acid was added for terminating the saponification reaction. Then, while the mixture was stirred under heating at 60 to 80 °C, ion-exchange water was added and MeOH was distilled off out of the reaction tank, to precipitate a modified EVOH. The precipitated modified EVOH was collected and pulverized by a mixer to give a modified EVOH powder, which was then added to an 1 g/L aqueous solution of acetic acid (bath ratio 20: 20 L of the aqueous solution / 1 kg of the powder) and the mixture was washed with stirring for 2 hours. This was deliquored and further added to a 1 g/L aqueous solution of acetic acid (bath ratio: 20) and was washed with stirring for 2 hours. This was deliquored, the residue was added to ion-exchange water (bath ratio: 20) and washed with stirring for 2 hours followed by deliquoring. This process was repeated three times for purification. The product was immersed with stirring in 10 L of an aqueous solution containing 0.5 g/L of acetic acid and 0.1 g/L of sodium acetate for 4 hours and was deliquored. The product was dried at 60 °C for 16 hours, to give a crude dried modified EVOH. The modified EVOH (A1a) obtained has a melt flow rate (MFR) (190 °C, under a load of 2160 g) was 1.5 g/10 min.

(3) Production of water-containing modified EVOH pellets

In a 80 L stirring tank equipped with a jacket, a stirrer and a reflux condenser were charged the crude dried modified EVOH (A1a) obtained in (2), water and MeOH, and the mixture was heated to 80 °C for dissolution. This solution was extruded through a tube with a diameter of 4 mm into a mixed solution of water/MeOH = 90/10 cooled to 5 °C to precipitate a strand, which was then cut by a strand cutter into pellets, that is, water-containing pellets of the modified EVOH. A moisture content of the water-containing pellet of the modified EVOH (A1a) obtained was determined to be 60 % by mass as measured by a halogen moisture analyzer "HR73" from Mettler.

(4) Production of pellets of a modified EVOH composition

The water-containing pellets of the modified EVOH (A1a) obtained in (3) were added to a 1 g/L aqueous solution of acetic acid (bath ratio: 20) and washed with stirring for 2 hours followed by deliquoring. This procedure was repeated three times. The deliquored product was added to ion-exchange water (bath ratio: 20) and washed with stirring for two hours followed by deliquoring. This procedure was repeated three times for purification, to give water-containing pellets of the modified EVOH (A1a) free from the catalyst residue generated during the saponification reaction. The water-containing pellets were added to an aqueous solution with a sodium acetate concentration of 0.5 g/L, an acetic acid concentration of 0.8 g/L, and a phosphoric acid concentration of 0.005 g/L (bath ratio: 20), and immersed for 4 hours with periodic stirring. The pellets were deliquored, dried at 80 °C for 3 hours and then at 105 °C for 16 hours, to give

pellets of a modified EVOH (A1a) composition.

(5) Content of each structural unit in a modified EVAc

An ethylene unit content ["a" mol% in Formula (VII)], a content of a structural unit derived from vinyl acetate ["b" mol% in Formula (VII)] and a content of a structural unit derived from MPDAc ["c" mol% in Formula (VII)] in a modified EVAc were calculated from $^1$H-NMR spectrum of a modified EVAc before saponification.

An aliquot of a solution of the modified EVAc obtained in (1) in MeOH was immersed in ion-exchange water to precipitate a modified EVAc. The precipitate was collected and dried in vacuo at 60 °C to give a dried modified EVAc. Then, the dried product was dissolved in dimethylsulfoxide (DMSO)-$d_6$ containing tetramethylsilane as an internal standard and measured by 500 MHz $^1$H-NMR ("GX-500" from JEOL Ltd.) at 80 °C.

Each peak in the spectrum is attributed as follows.

- 0.6 to 1.0 ppm: methylene protons (4H) in a terminal ethylene unit;
- 1.0 to 1.85 ppm: methylene protons (4H) in a middle ethylene unit, methylene protons (2H) in a main chain of a structural unit derived from MPDAc, and methylene protons (2H) in a vinyl acetate unit;
- 1.85 to 2.1 ppm: methyl protons (6H) in a structural unit derived from MPDAc and methyl protons (3H) in a vinyl acetate unit;
- 3.7 to 4.1 ppm: methylene proton (4H) in a side chain of a structural unit derived from MPDAc;
- 4.4 to 5.3 ppm: methine proton (1H) in a vinyl acetate unit.

According to the above attribution, an ethylene unit content ["a": mol%], a vinyl ester unit content ["b": mol%] and a content of a structural unit derived from MPDAc ["c": mol%] are calculated in accordance with the following equations, respectively, wherein "x" represents an integral of 0.6 to 1.0 ppm, "y" represents an integral of 1.0 to 1.85 ppm, "z" represents an integral of 3.7 to 4.1, and "w" represents an integral of 4.4 to 5.3 ppm.

$$a = (2x+2y-z-4w)/(2x+2y+z+4w)\times 100$$

$$b = 8w/(2x+2y+z+4w)\times 100$$

$$c = 2z/(2x+2y+z+4w)\times 100$$

According to the calculation described above, an ethylene unit content (a) was 27.0 mol%, a vinyl ester unit content (b) was 72.5 mol%, and a content of a structural unit derived from MPDAc (c) was 0.5 mol%. The values of "a", "b" and "c" in the modified EVAc were equal to the values of "a", "b" and "c" in the modified EVOH after saponification, respectively.

(6) Saponification degree of a modified EVOH

Likewise, a modified EVOH (A1a) after saponification was subjected to $^1$H-NMR spectrometry. The crude dried modified EVOH (A1a) obtained in (2) was dissolved in DMSO-$d_6$ containing tetramethylsilane as an internal standard and tetrafluoroacetic acid (TFA) as an additive, and measured by a 500 MHz $^1$H-NMR ("GX-500" from JEOL Ltd.) at 80 °C. In the $^1$H-NMR spectrum of the modified EVOH obtained in Production Example 1, a peak intensity of 1.85 to 2.1 ppm is significantly reduced, showing that not only an ester group in vinyl acetate, but also an ester group in the structural unit derived from MPDAc were converted to a hydroxyl group by saponification. A $^1$H-NMR spectrum obtained in Production Example 1 also shows such a peak intensity reduction in 1.85 to 2.1 ppm. A saponification degree was calculated from an intensity ratio of methyl protons (1.85 to 2.1 ppm) of a vinyl acetate unit to a methine proton (3.15 to 4.15 ppm) of a vinyl alcohol unit. A saponification degree of the modified EVOH (A1a) in Production Example 1 was 99.9 mol% or more.

(7) Melting point of a modified EVOH

In accordance with JIS K 7121, the pellets of the modified EVOH (A1a) compound obtained in (4) was warmed at a temperature raising rate of 10 °C /min from 30 °C to 215 °C, then rapidly cooled at a cooling rate of 100 °C/min to -35 °C, and again warmed at a temperature raising rate of 10 °C/min from -35 °C to 195 °C while a melting point was

measured (differential scanning calorimeter (DSC) "RDC220/SSC5200H" from Seiko Instruments Inc.). Indium and lead were used for temperature calibration. A melting peak temperature (Tpm) was determined from the 2nd run chart in accordance with the above JIS standard, and it was defined as a melting point of the modified EVOH (A1a). The melting point was 187 °C.

(8) Sodium salt content and phosphate compound content in a modified EVOH composition

In a Teflon® pressure vessel was charged 0.5 g of the pellets of the modified EVOH (A1a) composition obtained in (4), and to the mixture was added 5 mL of concentrated nitric acid, to allow for decomposition at room temperature for 30 min. Thirty minutes later, a lid was put on the vessel, and the mixture was heated by a wet decomposition apparatus ("MWS-2" from ACTAC Co., Ltd.) at 150 °C for 10 min and then at 180 °C for 5 min for decomposition, and then cooled to room temperature. This process liquid was transferred to a 50 mL measuring flask (made of TPX) and diluted with pure water to the predetermined volume. This solution was analyzed for contained metals by an ICP emission spectrophotometer ("OPTIMA4300DV" from PerkinElmer Co., Ltd.), to determine contents of sodium element and phosphorous element. A sodium salt content in the pellets of the modified EVOH (A1a) composition was 150 ppm in terms of sodium element, and a phosphate compound content was 10 ppm in terms of phosphate radical.

(9) Preparation of a multilayer film

Using the pellets of the modified EVOH (A1a) composition obtained in Production Example 1, a multilayer film was produced by forming a film having a five-layer structure of LLDPE layer/adhesive layer/modified EVOH (A1a) composition layer/adhesive layer /LLDPE layer using a three-type five-layer co-extruder. Here, each LLDPE layer, the adhesive layer and the modified EVOH (A1a) layer had thicknesses of 50 $\mu$m, 10 $\mu$m, and 10 $\mu$m, respectively.

(10) Measurement of peel strength before immersion

The multilayer film produced in (9) was subjected to interface peeling between the modified EVOH (A1a) composition layer and the adhesive layer, and was subjected to T-type peeling under the conditions of 23 °C and 50% RH, using AUTOGRAPH from Shimadzu Corporation (tension rate: 250 mm/min), to measure peel strength between the modified EVOH composition layer (A1a) and the adhesive layer. This peel strength was peel strength before storing. The results are shown in Table 1.

(11) Measurement of peel strength after immersion

The multilayer film produced in (9) was immersed in hot water at 80 °C for 7 days. Water on the surface of the film after immersion was wiped out, and the film was subjected to T-type peeling under the conditions of 23 °C and 50% RH, using AUTOGRAPH from Shimadzu Corporation (tension rate: 250 mm/min), to measure peel strength between the modified EVOH composition (A1) layer and the adhesive layer. This peel strength was peel strength after storing. The results are shown in Table 1.

Examples 2 to 7

A modified EVAc, a modified EVOH and pellets of a modified EVOH composition were produced and analyzed as described in Production Example 1, except the polymerization conditions in Production Example 1(1) were changed. The results are shown in Table 1. A sodium salt content in each pellet of the modified EVOH composition was 150 ppm in terms of sodium element, and a phosphate compound content was 10 ppm in terms of phosphoric acid radical. A multilayer structure was produced and evaluated as described in Example 1, except that the type of a modified EVOH composition was changed as shown in Table 1. The results are shown in Table 1.

Example 8 (Reference Example)

(1) Synthesis of a modified EVAc

In a 1 $m^3$ polymerization can equipped with a cooling coil were charged 500 kg of vinyl acetate, 100 kg of methanol, 500 ppm (based on vinyl acetate) of acetyl peroxide, 20 ppm (based on vinyl acetate) of citric acid, and 14 kg of 3,4-diacetoxy-1-butene, and the atmosphere in the system was first substituted with nitrogen gas and then with ethylene, where ethylene was forcibly fed to an ethylene pressure of 45 $kg/cm^2$. The mixture was warmed to 67 °C with stirring, and 4.5 kg in total of 3,4-diacetoxy-1-butene was added at a rate of 15 g/min, to initiate polymerization and the

polymerization was continued for 6 hours until a polymerization rate became 50 %. Then, the polymerization reaction was terminated, to give a modified EVAc with an ethylene unit content of 38 mol%.

(2) Saponification of a modified EVAc

A solution of the modified EVAc in methanol was fed at a rate of 10 kg/hour from the top of a plate tower (saponification tower), while a methanol solution containing 0.012 moles of sodium hydroxide based on 1 mole of the residual acetic acid group in the modified EVAc was fed from the tower top. Meanwhile, methanol was fed at a rate of 15 kg/hour from the tower bottom. A tower temperature was 100 to 110 °C, and a tower pressure was 3 $kg/cm^2G$. From 30 min after charge initiation, a solution of a modified EVOH in methanol (EVOH 30%, methanol 70%) was removed. A saponification degree of the modified EVOH was 99.5 mol%.

Subsequently, the solution of the modified EVOH in methanol was fed at a rate of 10 kg/hour from the top of a methanol/water solution conditioning tower while methanol vapor at 120 °C and water vapor were fed at rates of 4 kg/hour and 2.5 kg/hour, respectively, from the bottom of the tower and methanol was distilled off at a rate of 8 kg/hour from the top of the tower. Concurrently, 6 moles of methyl acetate based on one mole of sodium hydroxide used in saponification was fed from the middle of the tower at an inner temperature of 95 to 110 °C while a solution of the modified EVOH in water/alcohol (resin concentration: 35 %) from the bottom of the tower.

The solution of the modified EVOH in water/alcohol was extruded from a nozzle having a pore diameter of 4 mm into a coagulation liquid consisting of 5 % methanol and 95% water maintained at 5 °C in a coagulation liquid tank. At the end of coagulation, a strand product was cut by a cutter into porous pellets of EVOH with a water content of 45 % and with a diameter of 3.8 mm and a length of 4 mm. Next, 100 parts of the porous pellets were washed with 100 parts of water, and thrown into a mixed solution containing 0.032 % boric acid and 0.007 % calcium dihydrogenphosphate, and the mixture was stirred at 30 °C for 5 hours. Furthermore, the pellets were dried to a water content of 30 % in a nitrogen gas stream at a temperature of 70 °C with a water content of 0.6 % for 12 hours in a batch type vent box dryer, and then dried in a nitrogen gas stream at a temperature of 120 °C with a water content of 0.5% for 12 hours in a batch type tower fluidized bed dryer, to give pellets of the modified EVOH (A2a) composition. The pellets contained 150 ppm of boric acid in terms of boron and 50 ppm of calcium dihydrogenphosphate in terms of phosphoric acid radical based on the modified EVOH (A2a). An MFR was 4.0 g/10 min (measured at 210 °C and 2160 g).

[$^1$H-NMR]

The modified EVAc obtained and the EVOH after saponification were subjected to $^1$H-NMR spectrometry ("GX-500" from JEOL Ltd.) in accordance with the method described in JP 2004-359965A, to determine the amount of modifying groups introduced, which was 2.5 mol%.

A multilayer structure was produced and evaluated as described in Example 1, except that the modified EVOH composition obtained was used. The results are shown in Table 1.

Example 9 (Reference Example)

In accordance to the method described in JP 2003-231715A, a modified EVOH (A3a) was produced. Using an extruder "TEM-35BS" from Toshiba Machine Co., Ltd. (37 mm Φ, L/D = 52.5), barrel C1 was water-cooled, and barrels C2 to C3 were set to 200 °C and barrels C4 to C15 were set to 240 °C, and the extruder was operated at a screw rotation speed of 400 rpm. Dried EVOH pellets with an ethylene unit content of 32 mol%, a saponification degree of 99.9 mol% or more and an MFR of 1.7 g/10 min (190 °C, load: 2160 g) were fed at a rate of 11 kg/hr from a resin feed port in C1. After melting, water and oxygen was removed from vent 1, and epoxypropane as a modifying agent 3 was fed at a rate of 2.4 kg/hr from a liquid press-in port C9 (pressure during feeding: 6 MPa). Then, unreacted epoxypropane was removed from vent 2, and the modified EVOH (A3a) was pelletized. The modified EVOH (A3a) obtained had an ethylene unit content of 32 mol%, a saponification degree of 99.9 mol% or more, an MFR of 2.8 g/10 min (190 °C, load: 2160 g), and a modifying group content of 5 mol% as determined by a method described in JP 2003-231715. A multilayer structure was produced and evaluated as described in Example 1, except that the modified EVOH composition obtained was used. The results are shown in Table 1.

Examples 10, 11 (Reference Examples)

Pellets of a modified EVOH were produced and analyzed as described in Production Example 9, except that the polymerization conditions in Production Example 9 were changed. A multilayer structure was produced and evaluated as described in Example 1, except that the pellets of the modified EVOH obtained were used. The results are shown in Table 1.

Comparative Examples 1 to 4

EVOH pellets were produced and analyzed as described in Production Example 1, except that the polymerization conditions in Production Example 1 were changed and MPDAc was not charged. A multilayer structure was produced and evaluated as described in Example 1, except that the EVOH pellets obtained were used. The results are shown in Table 1.

[Table 1]

| | Modified EVOH | | | | | | | Peeling strength (gf/15mm) | |
|---|---|---|---|---|---|---|---|---|---|
| | MFR at 190 °C under 2160 g load (g/10min) | Saponification degree (mol%) | Ethylene unit content (mol%) | Modifying agent 1) | X | $R^1$ | Modifying agent content (mol%) | Before immersion | After immersion |
| Example 1 | 1.5 | ≥99.9 | 27 | 1 | $-CH_2-OH$ | Single bond | 0.5 | 300 | 700 |
| Example 2 | 1.3 | ≥99.9 | 27 | 1 | $-CH_2-OH$ | Single bond | 1.0 | 320 | 650 |
| Example 3 | 1.6 | ≥99.9 | 32 | 1 | $-CH_2-OH$ | Single bond | 0.5 | 250 | 750 |
| Example 4 | 2.4 | ≥99.9 | 38 | 1 | $-CH_2-OH$ | Single bond | 0.5 | 300 | 600 |
| Example 5 | 2.9 | ≥99.9 | 38 | 1 | $-CH_2-OH$ | Single bond | 1.5 | 240 | >1000 |
| Example 6 | 3.9 | ≥99.9 | 38 | 1 | $-CH_2-OH$ | Single bond | 2.5 | 520 | >1000 |
| Example 7 | 2.0 | ≥99.9 | 44 | 1 | $-CH_2-OH$ | Single bond | 1.0 | 300 | 750 |
| Example 8 2) | 4.0 | 95.0 | 38 | 2 | H | -CH(OH)- | 2.5 | 200 | 850 |
| Example 9 2) | 2.8 | ≥99.9 | 32 | 3 | H | $-O-CH(CH_3)-$ | 5.0 | 100 | 750 |
| Example 10 2) | 1.4 | ≥99.9 | 38 | 3 | H | $-O-CH(CH_3)-$ | 1.6 | 100 | 560 |
| Example 11 2) | 3.5 | ≥99.9 | 44 | 3 | H | $-O-CH(CH_3)-$ | 5.0 | 80 | 800 |
| Comparative Example 1 | 1.5 | ≥99.9 | 38 | Unmodified | - | - | <0.05 | 400 | 20 |
| Comparative Example 2 | 1.9 | ≥99.9 | 27 | Unmodified | - | - | <0.05 | 350 | 50 |

(continued)

| | Modified EVOH | | | | | | | Peeling strength (gf/15mm) | |
|---|---|---|---|---|---|---|---|---|---|
| | MFR at 190 °C under 2160 g load (g/10min) | Saponification degree (mol%) | Ethylene unit content (mol%) | Modifying agent 1) | X | $R^1$ | Modifying agent content (mol%) | Before immersion | After immersion |
| Comparative Example 3 | 1.8 | ≥99.9 | 44 | Unmodified | - | - | <0.05 | 370 | 30 |
| Comparative Example 4 | 5.8 | 95.0 | 51 | Unmodified | - | - | <0.05 | 270 | 25 |

1) Modifying agent 1: 2-methylene-1,3-propanediol diacetate, Modifying agent 2: 3,4-diacetoxy-1-butene, Modifying agent 3: epoxypropane; 2) Reference Example

As shown in Table 1, in a multilayer structure of the present invention (Examples 1 to 7) and of Examples 8 to 11 (Reference Examples) having a barrier layer made of a modified EVOH composition having a monomer unit having a primary hydroxyl group, peel strength after hot-water immersion was improved as compared to that before immersion. In contrast, when an unmodified EVOH was used (Comparative Examples 1 to 4), peel strength after hot-water immersion was lowered as compared to that before immersion.

Example 12

(1) Installation of a system for preventing harmful substance diffusion using a radon barrier film

The multilayer film produced in Example 1 was cut into two 75 cm×75 cm pieces. The two multilayer films were joined via a double-sided tape and an overlap part in one side was covered by a one-sided tape. The two joined multilayer films (radon barrier film) were immersed in hot water at a temperature of 80 °C for 7 days. Subsequently, a harmful substance was placed on concrete and covered by the radon barrier film, and a 1 kg weight was placed on each of the four corners and the center of the sheet. A radon-containing trash was used as a harmful substance source. The one-sided tape was an aluminum tape with a width of 10 cm. The double-sided tape was a rubber tape with a width of 10 cm.

(2) Detection of radon gas

At a position 20 cm above from the weight, detection of radon gas was attempted using a radon gas detector. A radon gas detector used was "Radon Scaut Home" from MEASURE WORKS Corporation. As a result, radon gas was not detected.

Comparative Example 5

A test was conducted as described in Example 12, except that the film used was the multilayer film produced in Comparative Example 1. As a result, radon gas was detected.

Presumably, in Example 12, peel strength between the adhesive layer and the barrier layer was improved after humidity conditioning, so that even though the weights were placed, peeling did not occur in the interface between the adhesive layer and the barrier layer and radon was not detected In contrast, in Comparative Example 5, stress was presumably applied when the weights were placed, so that a tear was formed in the barrier layer, resulting in detection of radon.

Example 13

(1) Installation of a system for preventing harmful substance diffusion using a landfill sheet

Preparation was conducted and a methane gas barrier system was installed as described in Example 12, substituting a methane-gas-generating trash for a radon-containing trash as a pollution source

(2) Detection of methane gas

At a position 20 cm apart from the surface of the system for preventing harmful substance diffusion (multilayer film), detection of methane gas was attempted using a methane gas detector. The methane gas detector used was "Methane Gas Detector RI-415" from Riken Keiki Co., Ltd. As a result, methane gas was not detected.

Comparative Example 6

A test was conducted as described in Example 13, except that the film used was the film produced in Comparative Example 1. As a result, methane gas was detected.

Presumably, in Example 13, peel strength between the adhesive layer and the barrier layer was improved after hot-water immersion, so that even though the weights were placed, peeling did not occur in the interface between the adhesive layer and the barrier layer and methane gas was not detected. In contrast, in Comparative Example 6, stress was presumably applied when the weights were placed, so that a tear was formed in the barrier layer, resulting in detection of methane gas.

## Claims

1. A geomembrane consisting of a multilayer structure comprising a barrier layer (A), an adhesive layer (B) made of an acid-modified thermoplastic resin and a thermoplastic resin layer (C), wherein

   the thermoplastic resin layer (C) is laminated on at least one side of the barrier layer (A) via the adhesive layer (B), and
   the barrier layer (A) comprises a modified ethylene-vinyl alcohol copolymer having an ethylene unit content of 18 mol% or more and 55 mol% or less based on the total monomer units and comprising a modifying group having a primary hydroxyl group represented by Formula (I):

   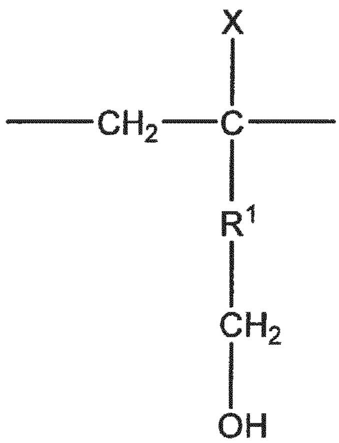

   (I)

   wherein, in Formula (I), $R^1$ is a single bond and X is a hydroxymethyl group.

2. The geomembrane according to Claim 1, wherein the acid-modified thermoplastic resin is a carboxylic acid-modified thermoplastic resin.

3. The geomembrane according to Claim 1 or 2, wherein a delamination strength (gf/15 mm) of the geomembrane after being immersed in hot water at 80 °C for 7 days is higher than a delamination strength (gf/15 mm) before immersion in hot water.

4. The geomembrane according to any of Claims 1 to 3, wherein a content of the modifying group having a primary hydroxyl group is 0.05 mol% or more and 20 mol% or less.

5. The geomembrane according to any of Claims 1 to 4, wherein a thermoplastic resin constituting the thermoplastic resin layer (C) is at least one selected from the group consisting of a polyolefin, a polyamide and a polyester.

6. The geomembrane according to Claim 5, wherein the thermoplastic resin constituting the thermoplastic resin layer (C) comprises at least one selected from the group consisting of an antioxidant, an ultraviolet absorber and a colorant.

7. A landfill sheet using the geomembrane according to any of Claims 1 to 6.

8. The landfill sheet according to Claim 7, wherein the landfill sheet is formed by joining a plurality of the multilayer structures; in the overlap part of the ends of the multilayer structures, the multilayer structures are joined via a double-sided tape; and a one-sided tape is applied such that it covers the overlap part.

9. A radon barrier film using the geomembrane according to any of Claims 1 to 6.

10. The radon barrier film according to Claim 9, wherein the radon barrier film is formed by joining a plurality of the multilayer structures; in the overlap part of the ends of the multilayer structures, the multilayer structures are joined via a double-sided tape; and a one-sided tape is applied such that it covers the overlap part.

11. A method for preventing harmful substance diffusion, comprising covering a land surface with the landfill sheet according to Claim 7 or 8 or the radon barrier film according to Claim 9 or 10 to isolate a pollution source in the soil

from the atmosphere, wherein the harmful substance is radon gas when covering the land surface with the radon barrier film.

12. The method for preventing harmful substance diffusion according to Claim 11, wherein harmful substances in the soil covered with the landfill sheet or the radon barrier film are introduced into a collector through a pipe which is inserted in a hole formed in the multilayer structures.

**Patentansprüche**

1. Geomembran, bestehend aus einer Mehrschichtstruktur, umfassend eine Sperrschicht (A), eine Haftschicht (B) aus einem säuremodifizierten thermoplastischen Harz und eine thermoplastische Harzschicht (C), wobei

   die thermoplastische Harzschicht (C) auf mindestens eine Seite der Sperrschicht (A) über die Haftschicht (B) laminiert ist, und
   die Sperrschicht (A) ein modifiziertes Ethylen-Vinylalkohol-Copolymer mit einem Gehalt an Ethyleneinheiten von 18 Mol-% oder mehr und 55 Mol-% oder weniger, bezogen auf die gesamten Monomereinheiten, umfasst und eine modifizierende Gruppe mit einer primären Hydroxylgruppe, dargestellt durch die Formel (I), umfasst:

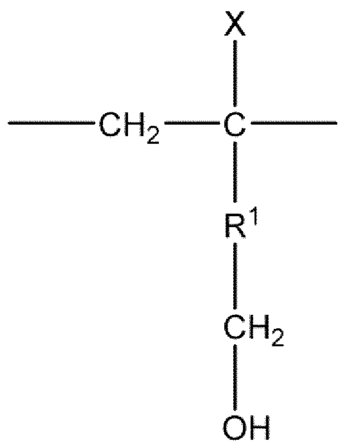

(I)

   wobei in Formel (I) $R^1$ eine Einfachbindung und X eine Hydroxymethylgruppe ist.

2. Geomembran nach Anspruch 1, wobei das säuremodifizierte thermoplastische Harz ein Carbonsäure-modifiziertes thermoplastisches Harz ist.

3. Geomembran nach Anspruch 1 oder 2, wobei eine Delaminationsfestigkeit (gf/15 mm) der Geomembran nach Eintauchen derselben in heißes Wasser bei 80°C für 7 Tage höher ist als eine Delaminationsfestigkeit (gf/15 mm) vor dem Eintauchen in heißes Wasser.

4. Geomembran nach einem der Ansprüche 1 bis 3, wobei ein Gehalt der modifizierenden Gruppe mit einer primären Hydroxylgruppe 0,05 Mol-% oder mehr und 20 Mol-% oder weniger beträgt.

5. Geomembran nach einem der Ansprüche 1 bis 4, wobei ein thermoplastisches Harz, das die thermoplastische Harzschicht (C) bildet, mindestens eines, ausgewählt aus der Gruppe, bestehend aus einem Polyolefin, einem Polyamid und einem Polyester, ist.

6. Geomembran nach Anspruch 5, wobei das thermoplastische Harz, das die thermoplastische Harzschicht (C) bildet, mindestens eines, ausgewählt aus der Gruppe, bestehend aus einem Antioxidationsmittel, einem Ultraviolettabsorber und einem Farbstoff, umfasst.

7. Deponiefolie, verwendend die Geomembran nach einem der Ansprüche 1 bis 6.

8. Deponiefolie nach Anspruch 7, wobei die Deponiefolie durch Verbinden einer Mehrzahl der Mehrschichtstrukturen gebildet wird; in dem Überlappungsteil der Enden der Mehrschichtstrukturen die Mehrschichtstrukturen über ein

doppelseitiges Klebeband verbunden werden; und ein einseitiges Klebeband so angebracht wird, dass es den Überlappungsteil bedeckt.

9. Radonsperrfolie, verwendend die Geomembran nach einem der Ansprüche 1 bis 6.

10. Radonsperrfolie nach Anspruch 9, wobei die Radonsperrfolie durch Verbinden einer Mehrzahl der Mehrschichtstrukturen gebildet wird; in dem Überlappungsteil der Enden der Mehrschichtstrukturen die Mehrschichtstrukturen über ein doppelseitiges Klebeband verbunden werden; und ein einseitiges Klebeband so angebracht wird, dass es den Überlappungsteil bedeckt.

11. Verfahren zur Verhinderung von Schadstoffdiffusion, umfassend das Bedecken einer Landoberfläche mit der Deponiefolie nach Anspruch 7 oder 8 oder der Radonsperrfolie nach Anspruch 9 oder 10, um eine Verschmutzungsquelle im Boden von der Atmosphäre zu isolieren, wobei der Schadstoff Radongas ist, wenn die Landoberfläche mit der Radonsperrfolie bedeckt wird.

12. Verfahren zur Verhinderung von Schadstoffdiffusion nach Anspruch 11, wobei Schadstoffe in dem mit der Deponiefolie oder der Radonsperrfolie bedeckten Boden durch ein Rohr, das in ein in den Mehrschichtstrukturen ausgebildetes Loch eingeführt wird, in einen Sammler eingeleitet werden.

## Revendications

1. Géomembrane constituée d'une structure multicouche comprenant une couche barrière (A), une couche adhésive (B) réalisée en une résine thermoplastique modifiée par un acide et une couche de résine thermoplastique (C), dans laquelle la couche de résine thermoplastique (C) est stratifiée sur au moins un côté de la couche barrière (A) par le biais de la couche adhésive (B), et

   la couche barrière (A) comprend un copolymère d'éthylène-alcool vinylique modifié ayant une teneur en unité d'éthylène de 18 % en mole ou plus et 55 % en mole ou moins basée sur les unités monomères totales et comprenant un groupe modificateur ayant un groupe hydroxyle primaire représenté par la Formule (I) :

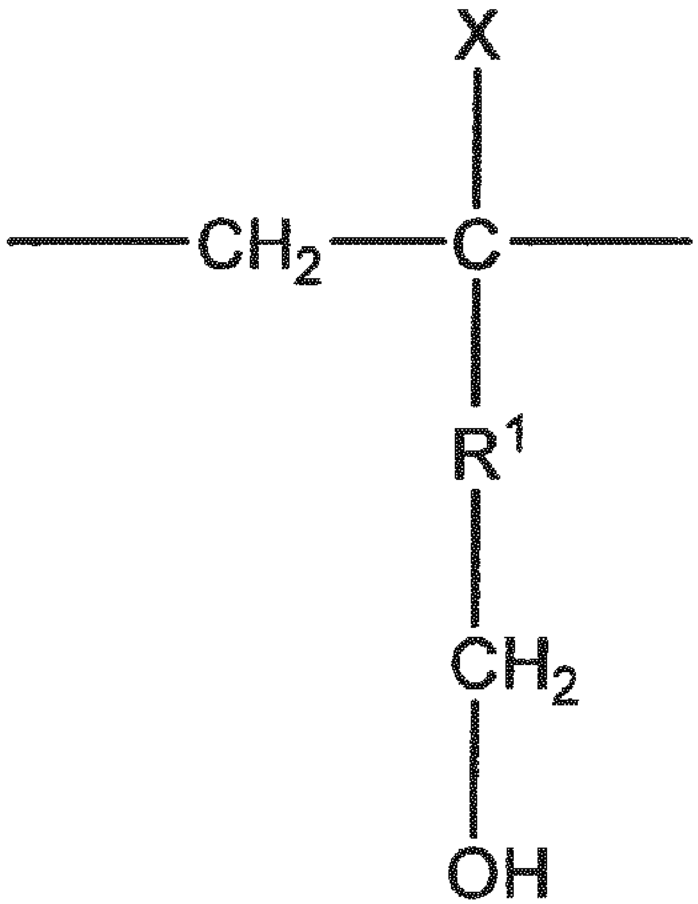

(I)

dans laquelle, dans la Formule (1), $R^1$ est une liaison simple et X est un groupe hydroxyméthyle.

**2.** Géomembrane selon la revendication 1, dans laquelle la résine thermoplastique modifiée par un acide est une résine thermoplastique modifiée par un acide carboxylique.

**3.** Géomembrane selon la revendication 1 ou 2, dans laquelle une résistance au clivage (gf/15 mm) de la géomembrane après avoir été immergée dans de l'eau chaude à 80 °C pendant 7 jours est supérieure à une résistance au clivage (gf/15 mm) avant l'immersion dans de l'eau chaude.

**4.** Géomembrane selon l'une quelconque des revendications 1 à 3, dans laquelle une teneur en le groupe modificateur ayant un groupe hydroxyle primaire est de 0,05 % en mole ou plus et 20 % en mole ou moins.

**5.** Géomembrane selon l'une quelconque des revendications 1 à 4, dans laquelle une résine thermoplastique constituant la couche de résine thermoplastique (C) est au moins une sélectionnée parmi le groupe constitué d'une polyoléfine, d'un polyamide et d'un polyester.

**6.** Géomembrane selon la revendication 5, dans laquelle la résine thermoplastique constituant la couche de résine thermoplastique (C) comprend au moins une sélectionnée parmi le groupe constitué d'un antioxydant, d'un absorbeur d'ultraviolet et d'un colorant.

**7.** Feuille d'enfouissement utilisant la géomembrane selon l'une quelconque des revendications 1 à 6.

**8.** Feuille d'enfouissement selon la revendication 7, dans laquelle la feuille d'enfouissement est formée en reliant une pluralité des structures multicouches ; dans la partie de chevauchement des extrémités des structures multicouches, les structures multicouches sont reliées par le biais d'un ruban double face ; et un ruban simple face est appliqué de sorte qu'il recouvre la partie de chevauchement.

**9.** Film barrière au radon utilisant la géomembrane selon l'une quelconque des revendications 1 à 6.

**10.** Film barrière au radon selon la revendication 9, dans lequel le film barrière au radon est formé en reliant une pluralité des structures multicouches ; dans la partie de chevauchement des extrémités des structures multicouches, les structures multicouches sont reliées par le biais d'un ruban double face ; et un ruban simple face est appliqué de sorte qu'il recouvre la partie de chevauchement.

**11.** Procédé de prévention de diffusion de substances dangereuses, comprenant recouvrir une surface de terrain de la feuille d'enfouissement selon la revendication 7 ou 8 ou du film barrière au radon selon la revendication 9 ou 10 pour isoler une source de pollution dans le sol de l'atmosphère, dans lequel la substance dangereuse est du gaz radon lors du recouvrement de la surface de terrain du film barrière au radon.

**12.** Procédé de prévention de diffusion de substances dangereuses selon la revendication 11, dans lequel des substances dangereuses dans le sol recouvert de la feuille d'enfouissement ou du film barrière au radon sont introduites dans un collecteur par un tuyau qui est inséré dans un orifice formé dans les structures multicouches.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2489509 A1
- EP 2508343 A1
- EP 2133397 A1
- EP 1059163 A2
- JP 2004359965 A
- JP 2003231715 A


### Non-patent literature cited in the description


- *JOURNAL OF GEOTECHNICAL AND GEOENVIRONMENTAL ENGINEERING,* vol. 136 (9), 1167-1177